# FASCICULE DE BREVET EUROPEEN

(11) **EP 2 452 862 B1**
(45) Date de publication et mention de la délivrance du brevet: **10.06.2015**
(21) Numéro de dépôt: 11187680.1
(22) Date de dépôt: 03.11.2011
(51) Int. Cl.: B62D 3/12

(54) **Carter de direction de véhicule automobile à section variable**
Lenkgehäuse eines Kraftfahrzeugs mit veränderlichem Querschnitt
Automobile steering gearbox with variable cross-section

(30) Priorité: 10.11.2010 FR 1059286
(43) Date de publication de la demande: 16.05.2012
(73) Titulaire: JTEKT Europe, 69540 Irigny (FR)
(72) Inventeur: Rey, Laurent, 69100 Villeurbanne (FR)
(74) Mandataire: Chevalier, Renaud Philippe

(56) Documents cités:
- EP-A1- 1 344 709
- EP-A1- 2 039 588
- DE-A1- 10 010 838
- DE-A1- 10 021 301
- DE-A1-102005 001 057
- DE-A1-102008 000 142
- DE-A1-102008 040 847
- FR-A1- 2 440 859
- FR-A5- 2 149 900

## Description

La présente invention concerne, de façon générale, les systèmes de direction de véhicules automobiles. Elle se rapporte plus particulièrement à un carter de direction, aussi appelé carter de crémaillère, qui est une pièce creuse de support et de protection, dans laquelle sont montés et guidés une crémaillère et un pignon qui engrène avec la crémaillère, et sur laquelle peuvent aussi être montées des pièces annexes de guidage et d'étanchéité qui coopèrent avec la crémaillère et le pignon. Compte tenu de la forme très allongée de la crémaillère, le carter de direction possède lui-même une forme allongée et creuse, donc une forme globalement tubulaire.

Dans le cas d'une direction à assistance électrique, le carter de direction est, le plus souvent, assemblé à un autre carter qui renferme un réducteur à engrenages, par exemple un réducteur à vis sans fin et roue tangente, auquel est accouplé l'arbre de sortie du moteur électrique d'assistance. Dans le cas d'une direction à assistance hydraulique, le carter de direction possède des formes internes notamment cylindriques qui constituent, avec la crémaillère, l'équivalent d'un vérin hydraulique destiné à assister le conducteur du véhicule en amplifiant l'effort exercé par ce dernier sur le volant.

Dans tous les cas, le carter de direction réalise aussi une liaison entre le système de direction, considéré dans sa globalité, et la caisse du véhicule automobile concerné, plus particulièrement son berceau. Le carter de direction doit donc posséder une bonne rigidité, lui permettant d'absorber et de transmettre des efforts mécaniques.

Ainsi, tout carter de direction doit être fabriqué de manière à, d'une part, posséder une bonne résistance mécanique et, d'autre part, posséder une géométrie très précise pour le positionnement et le guidage de divers organes. Pour viser cet objectif, plusieurs modes d'obtention d'un carter de direction sont connus.

De la manière la plus habituelle, un carter de direction est réalisé par moulage, en alliage d'aluminium, la pièce obtenue par moulage étant ensuite usinée de manière très précise dans ses zones fonctionnelles, destinées à coopérer avec d'autres éléments du système de direction.

Ce mode d'obtention présente l'inconvénient d'être coûteux, puisqu'il comporte de nombreuses étapes de fabrication à réaliser successivement. En outre, l'obtention de la forme tubulaire interne du carter est particulièrement pénalisante, puisqu'elle nécessite, lors du moulage, la présence et le mouvement en sens opposés de deux noyaux particulièrement longs. Ces deux noyaux comportent obligatoirement une dépouille, nécessaire pour le démoulage du carter, de sorte que le « cylindre » obtenu possède inévitablement une section interne plus petite à mi-longueur et plus grande vers ses deux extrémités. La forme intérieure de section non constante, ainsi obtenue à la sortie du moule, nécessite dans certains cas d'être reprise par un usinage complet de la face interne du carter moulé, afin de rendre ce carter parfaitement tubulaire, c'est-à-dire de lui donner un diamètre intérieur constant, sur toute sa longueur.

En conséquence du mode de fabrication le plus habituel des carters de direction, le guidage correct de la crémaillère nécessite l'ajout, vers les extrémités du carter, de bagues internes prévues pour contenir le mouvement radial indésirable de la crémaillère. De plus, les contacts entre les boîtiers des rotules d'articulation des biellettes de direction, prévus aux deux extrémités de la crémaillère, d'une part, et les extrémités du carter lui-même, d'autre part, dans les positions de fin de course de la crémaillère, sont trop bruyants de sorte que la fixation d'un limiteur ou d'une butée en matière plastique doit encore être prévue, à chaque extrémité du carter. Dans le cas de noyaux de moule avec des angles de dépouille très importants et/ou d'une crémaillère de diamètre faible, les fonctions de limitation de mouvement ou de butée précédemment évoquées sont particulièrement difficiles à réaliser. Ces fonctions nécessitent alors des bagues massives, d'épaisseur radiale importante, et/ou des limiteurs travaillant en cisaillement, ce qui est très pénalisant du point de vue mécanique.

Par ailleurs, on connaît des pièces en matières plastiques renforcées avec des fibres suffisamment résistantes pour remplacer les pièces en alliage aluminium, et utilisées dans le domaine automobile notamment pour des applications prenant place sous le capot moteur : bac à huile, crépine, boîtier de papillon des gaz, etc. De telles matières plastiques renforcées présentent, en elles-mêmes, l'inconvénient d'être moins rigides que l'aluminium et ses alliages, de sorte qu'il est nécessaire de renforcer considérablement les pièces ainsi fabriquées, par exemple par des nervures de rigidification, pour obtenir une rigidité équivalente à celle de l'aluminium.

Pour des carters de direction, l'espace disponible restreint et les exigences de rigidité propres à ces carters limitent encore à l'heure actuelle la réalisation dans ces matières plastiques renforcées.

Il est également connu de réaliser des carters de direction en deux ou plusieurs parties, sous la forme d'un carter en aluminium associé à un tube en acier, ou sous la forme de deux carters partiels en aluminium assemblés l'un à l'autre. En particulier, un tel carter peut être réalisé avec sa partie la plus proche du pignon en aluminium, et une partie tubulaire en acier, les deux parties étant assemblées en force, ceci notamment pour des directions à assistance hydraulique.

Ainsi, les documents de brevets DE 100 21 301 A1 et DE 10 2008 000 142 A1 montrent des exemples de carters de direction réalisés en trois parties de carter tubulaires, réunies entre elles, la forme générale du carter résultant de la réunion de ces parties restant une forme cylindrique.

La présente invention vise à remédier aux divers inconvénients précédemment exposés, et en particulier à éviter une fabrication coûteuse et un manque de rigidité du carter de direction, et elle a donc pour but de fournir un carter de direction conçu aussi bien pour une fabrication aisée et économique que pour une rigidité optimale, tout en offrant une liberté de formes adaptée notamment aux fonctions de guidage et de limitation de mouvement.

A cet effet, la présente invention a pour objet un carter de direction de véhicule automobile, le carter de direction étant prévu pour loger et guider une crémaillère, et de préférence aussi au moins un pignon venant en prise avec la crémaillère, ainsi qu'éventuellement un poussoir pressant le pignon contre la crémaillère, le carter de direction possédant une forme allongée et creuse, et ce carter de direction étant constitué par au moins deux parties de carter qui se succèdent dans la direction longitudinale du carter et qui sont réunies entre elles, ledit carter étant caractérisé par le fait que ces parties sont conformées de manière à conférer au carter de direction une forme extérieure ovoïde ou en fuseau, la section du carter étant significativement plus importante dans sa région centrale que dans les régions de ses extrémités.

Ainsi, le carter de direction peut être notamment composé de deux demi-carters, à savoir un demi-carter droit et un demi-carter gauche, accolés et réunis l'un à l'autre dans un plan de joint médian, chaque demi-carter possédant une section croissante entre son extrémité éloignée du plan de joint et ce plan de joint.

Le carter de direction, objet de l'invention, peut aussi comporter plus de deux parties ; en particulier, on peut envisager une structure « modulaire » avec un carter composé d'au moins trois parties réunies entre elles, comprenant deux parties formant les extrémités du carter de direction, et au moins un module de liaison intermédiaire, de forme cylindrique ou sensiblement cylindrique.

Les parties constitutives du carter de direction objet de l'invention, en particulier les deux demi-carters, comportent de préférence intérieurement des nervures de renfort, notamment en forme d'ailettes radiales.

Le problème à la base de l'invention est ainsi résolu en concevant un carter de direction qui est divisé, dans le sens de sa longueur, en au moins deux parties qui, une fois réunies, procurent la forme générale tubulaire souhaitée, toutefois avec une section intérieure ou un diamètre intérieur qui est plus faible aux extrémités du carter et plus grand à mi-longueur de ce carter.

La composition du carter de direction en au moins deux parties, en particulier en deux demi-carters de forme similaire mais montés en sens opposés, permet de simplifier les outillages de moulage, qu'il s'agisse d'un carter en matière plastique renforcée ou d'un carter en métal ou en alliage métallique, notamment en alliage d'aluminium. Ceci permet de réduire les coûts et de fiabiliser la fabrication.

La forme intérieure tubulaire, mais de section ou diamètre plus grand dans la région centrale du carter, est avantageuse à plusieurs points de vue :
- Cette forme permet déjà par elle-même, sans créer de surépaisseur ni ajouter des nervures, une rigidification efficace du carter de direction par augmentation de son moment d'inertie dans la région où ce carter est habituellement le plus flexible, c'est-à-dire entre ses points de fixation qui sont assez proches de ses extrémités.
- La forme bombée du carter de direction procure aussi, à l'intérieur de ce carter, un espace libre supplémentaire, pouvant être mis à profit pour l'intégration des moyens de guidage du pignon de direction, du poussoir pressant la crémaillère contre ce pignon, ou même de certains composants électriques ou électroniques dans le cas d'une direction à assistance électrique. Le moulage, à l'intérieur des demi-carters ou autres parties de carter, de formes plus ou moins complexes servant de logement à de tels composants, facilite encore cette intégration.
- La forme bombée du carter de direction crée aussi un espace libre pour l'implantation de nervures ou ailettes de renfort à l'intérieur de ce carter. Associées à la paroi globalement ovoïde du carter de direction, de telles nervures ou ailettes procurent à ce carter une rigidité suffisante, par elles-mêmes ou éventuellement en combinaison avec des nervures extérieures telles qu'habituellement prévues.
- Dans la mesure où les extrémités du carter de direction sont resserrées, et où les demi-carters sont réalisés dans une matière plastique, l'un au moins des demi-carters peut intégrer directement, dans la région d'une extrémité du carter de direction, une fonction de guidage de la crémaillère, y compris les fonctions de bague interne et de butée, du fait que les formes réalisant ces fonctions peuvent être facilement obtenues par injection de matière plastique, et aussi du fait que le contact entre métal et matière plastique n'est pas bruyant, à la différence du contact métal contre métal.
- Selon une autre possibilité avantageuse, l'une au moins des parties constitutives du carter de direction, en particulier un demi-carter, peut comporter intérieurement, dans la région d'une extrémité du carter de direction, des formes d'accrochage pour une bague rapportée et/ou pour une butée pour la crémaillère. La forme resserrée de l'extrémité du carter a ici pour avantage de permettre l'insertion d'une bague fine, et d'une butée travaillant en compression et non plus en cisaillement.

Comme déjà mentionné, les parties constitutives du carter de direction objet de l'invention, en particulier les deux demi-carters, sont réalisables en matière plastique. Cette matière plastique est de préférence renforcée par des fibres de verre, de carbone ou d'aramide, ou par une combinaison de telles fibres.

Les parties constitutives du carter de direction, en particulier les deux demi-carters, peuvent être réunis par une technique de soudage, telle que le soudage par friction rotative, ici particulièrement intéressant. En effet, le soudage par friction rotative est connu pour être très robuste, puisque le cordon de soudure ainsi obtenu possède une rigidité qui atteint 80% à 90% de la rigidité intrinsèque des matériaux soudés entre eux. De plus, la précision angulaire pouvant être atteinte avec cette technique de soudage est suffisante pour le nécessaire alignement des points de fixation du carter de direction, situés habituellement vers les extrémités de ce carter donc respectivement sur les deux demi-carters. Toutefois, la soudure par friction rotative implique que la section des deux demi-carters, au niveau de leur liaison donc dans leur plan de joint, soit parfaitement circulaire.

Une soudure par d'autres techniques, en particulier par laser ou par infrarouge ou par ultrasons est également possible, avec l'avantage de convenir aussi pour des parties de carter à réunir de section non circulaire dans leur plan de joint. Dans le cas de la soudure laser, les matières plastiques des deux-demi carters doivent être choisies identiques ou compatibles entre elles, et ces matières doivent être activables par le laser.

Les parties constitutives du carter de direction, en particulier les deux-demi carters peuvent également être réunies par collage. Dans ce cas aussi, la section au niveau du plan de joint peut ne pas être circulaire.

L'invention sera mieux comprise à l'aide de la description qui suit, en référence au dessin schématique annexé représentant, à titre d'exemples, quelques formes de réalisation de ce carter de direction.
Figure 1 est une vue extérieure d'un carter de direction conforme à la présente invention ;
Figure 2 est une vue en coupe longitudinale du demi-carter droit, appartenant au carter de la figure 1 ;
Figure 3 est une vue en coupe longitudinale du demi-carter gauche, appartenant au même carter ;
Figure 4 est une vue en bout du demi-carter de la figure 3 ;
Figure 5 est une vue en coupe longitudinale du carter de direction, tel qu'il résulte de la réunion des deux demi-carters respectivement selon les figures 2 et 3 ;
Figure 6 est une vue en coupe longitudinale du même carter de direction, après mise en place de la crémaillère ;
Figure 7 est une vue en coupe longitudinale d'un carter de direction conforme à l'invention dans un autre mode de réalisation.

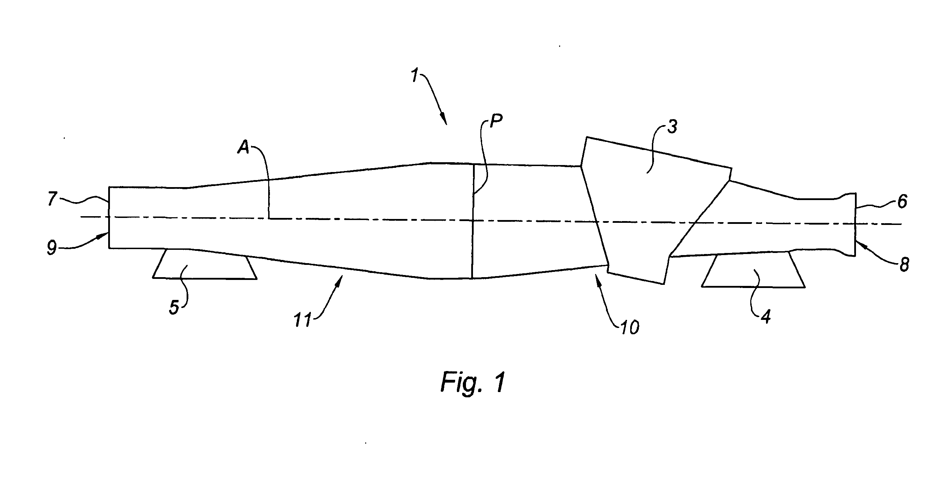

Comme le montre les figures 1, 5 et 6, un carter de direction 1 présente une forme générale allongée, avec un axe longitudinal A. Le carter de direction 1 possède une conformation creuse, lui permettant de recevoir une crémaillère 2, ce carter 1 présentant aussi une excroissance 3 recevant le pignon de direction (non représenté). Le carter de direction 1 comporte encore, extérieurement, deux éléments de fixation 4 et 5 pour sa liaison avec la caisse d'un véhicule automobile. Les deux éléments de fixation 4 et 5 sont situés, respectivement, à faible distance axiale de deux extrémités 6 et 7 du carter 1.

Ce carter de direction 1 présente, de façon générale, une forme extérieure ovoïde ou en fuseau, avec une variation continue de sa section. La section du carter 1, dans la partie centrale de celui-ci c'est-à-dire à mi-longueur, est significativement plus importante que la section du même carter 1 à ses deux extrémités 6 et 7.

La cavité interne du carter 1, logeant la crémaillère 2, communique avec l'extérieur aux deux extrémités 6 et 7 de ce carter 1, par des ouvertures circulaires respectives 8 et 9.

La carter de direction 1 est composé de deux parties dites demi-carters, à savoir un demi-carter droit 10 et un demi-carter gauche 11, qui sont accolés et réunis l'un à l'autre dans un plan de joint P médian, perpendiculaire à l'axe longitudinal A. Les termes « droit » et « gauche » se référent ici au seul dessin et ne préjugent pas de la position ou du sens du montage relativement au véhicule.

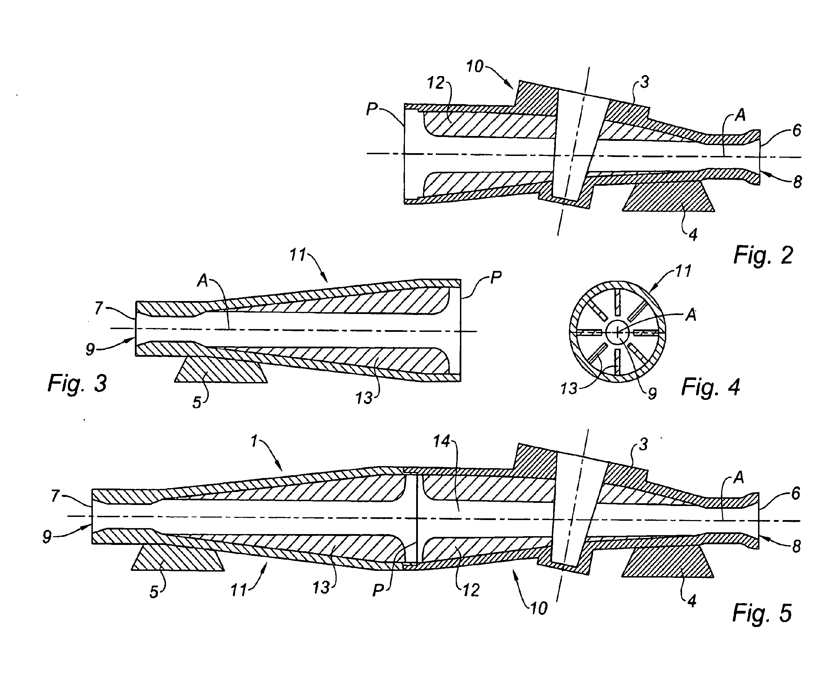

Le demi-carter droit 10, montré seul sur la figure 2, comporte extérieurement l'excroissance 3 pour le pignon de direction, ainsi que l'un des éléments de fixation 4. Ce demi-carter droit 10 comporte aussi, intérieurement, une série d'ailettes radiales 12 de renfort, qui s'étendent sur la plus grande partie de sa longueur. La section du demi-carter droit 10 est sensiblement circulaire et globalement croissante entre l'extrémité 6 et plan de joint P.

Le demi-carter gauche 11, représenté aux figures 3 et 4, comporte extérieurement l'autre élément de fixation 5. Ce demi-carter gauche 11 comporte lui aussi, intérieurement, une série d'ailettes radiales 13 de renfort, qui s'étendent sur la plus grande partie de sa longueur. La section du demi-carter gauche 11 est sensiblement circulaire et globalement croissante entre l'extrémité 7 et le plan de joint P.

Les sections maximales des deux demi-carters 10 et 11, au niveau du plan de joint P, sont identiques.

Les deux demi-carters 10 et 11 sont notamment réalisables, par moulage, en une matière plastique renforcée par des fibres de verre, de carbone ou d'aramide, ou par une combinaison de deux ou trois de ces types fibres.

Les deux demi-carters 10 et 11 ainsi constitués étant rapprochés suivant leur plan de joint P, la liaison entre ces deux dem i-carters 10 et 11 est réalisée par soudure, avec une technique de soudage adaptée à la matière constitutive desdits demi-carters. Ainsi on peut envisager une soudure par friction rotative, une soudure laser, une soudure infrarouge, une soudure par ultrasons, etc. Une liaison des deux demi-carters 10 et 11 par collage est aussi envisageable.

Après réunion des deux demi-carters 10 et 11, on obtient le carter de direction 1 de forme creuse, plus particulièrement avec une cavité interne 14 dont le diamètre intérieur est plus important dans la partie centrale du carter qu'à proximité de ses deux extrémités 6 et 7.

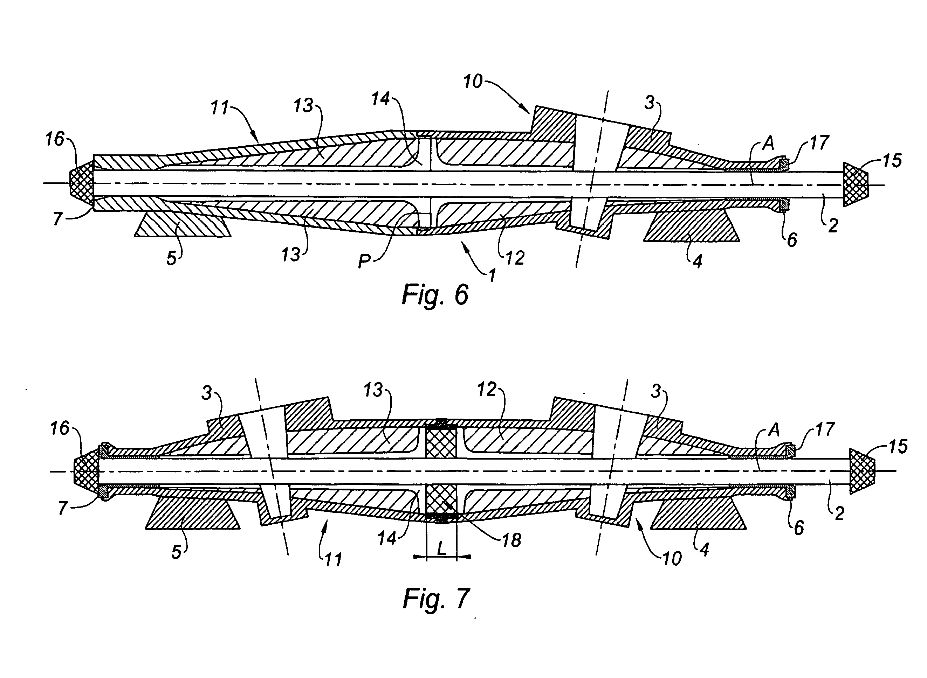

Comme le montre la figure 6, la cavité interne 14 du carter 1 reçoit la crémaillère 2, montée coulissante au travers des ouvertures 8 et 9 terminales du carter. Les deux extrémités de la crémaillère 2, situées à l'extérieur du carter 1, reçoivent respectivement deux boîtiers de rotule 15 et 16, pour l'articulation des biellettes de direction (non représentées).

La figure 6 illustre aussi les possibilités de guidage de la crémaillère 2 dans le carter de direction 1. Comme représenté ici pour le demi-carter gauche 11, la forme et le dimensionnement interne de ce demi-carter, vers l'extrémité 7 correspondante, peuvent être adaptées pour réaliser directement les fonctions de bague de reprise d'effort et de butée.

En alternative, et comme représenté ici pour le demi-carter droit 10, celui-ci peut aussi comporter, vers l'extrémité 6 correspondante, des formes d'accrochage intérieures pour une bague 17 rapportée, à fonctions de bague de reprise d'effort et de butée. La bague 17 peut être fixée par clipsage ou par soudage. Le volume libre restant de la cavité interne 14 du carter de direction 1 peut encore recevoir, d'une manière non représentée, d'autres éléments du système de direction : poussoir pressant la crémaillère 2 contre le pignon de direction, organes moteurs et/ou de transmission d'un dispositif d'assistance hydraulique ou électrique, circuits électroniques pour le pilotage d'une direction assistée électrique, etc.

La figure 7, sur laquelle les éléments correspondant à ceux décrits précédemment sont désignées par les mêmes références, montre une variante de ce carter de direction 1, qui possède encore une forme générale ovoïde ou en fuseau, résultant pour l'essentiel de deux demi-carters 10 et 11. Cependant, les deux demi-carters 10 et 11 sont ici réunis par l'intermédiaire d'un module de liaison 18, de forme cylindrique, possédant une longueur axiale L. En prévoyant ainsi des modules de liaison de longueur ajustable, on obtient une conception « modulaire » permettant l'utilisation des mêmes demi-carters 10 et 11 dans la fabrication de divers carters de direction, qui différent les uns des autres par leurs longueurs.

Comme le montre aussi la figure 7, deux demi-carters 10 et 11 identiques peuvent être disposés et assemblés en sens opposés, de manière à constituer un carter pour une direction à double pignon, chaque demi-carter 10 ou 11 comportant une excroissance 3. L'une des excroissances 3 reçoit le pignon de direction, accouplé à la colonne de direction, tandis que l'autre excroissance 3 reçoit un pignon supplémentaire, accouplé à un dispositif d'assistance de la direction.

L'on ne s'éloignerait pas du cadre de l'invention, telle que définie dans les revendications annexées :
- En réalisant le carter de direction, donc les deux demi-carters, avec une section non circulaire, par exemple ovale ;
- En constituant le carter de direction par la réunion de plus de deux ou trois parties ;
- En réalisant les demi-carters ou parties de carter en métal, notamment en aluminium ou en alliage d'aluminium ;
- En assemblant les demi-carters ou parties de carter non seulement par soudage ou collage, mais encore par un assemblage mécanique, tel qu'emmanchement ou emboîtage ou vissage ;
- En destinant ce carter à des systèmes de direction de tous types, avec les adaptations nécessaires.

## Revendications

1. Carter de direction (1) de véhicule automobile, prévu pour loger et guider une crémaillère (2), et de préférence aussi au moins un pignon venant en prise avec la crémaillère (2), ainsi qu'éventuellement un poussoir pressant le pignon contre la crémaillère (2), ce carter de direction (1) possédant une forme allongée et creuse, et étant constitué par au moins deux parties de carter (10, 11 ; 18) qui se succèdent dans la direction longitudinale (A) du carter (1) et qui sont réunies entre elles, **caractérisé en ce que** ces parties (10, 11 ; 18) de carter sont conformées de manière à conférer au carter de direction (1) une forme extérieure ovoïde ou en fuseau, la section du carter étant significativement plus importante dans sa région centrale que dans les régions de ses extrémités (6,7).

2. Carter de direction (1) selon la revendication 1, **caractérisé en ce qu'**il est composé de deux demi-carters (10,11), à savoir un demi-carter droit (10) et un demi-carter gauche (11), accolés et réunis l'un à l'autre dans un plan de joint (P) médian, chaque demi-carter (10) possédant une section croissante entre son extrémité (6,7) éloignée du plan de joint (P) et ce plan de joint (P).

3. Carter de direction (1) selon la revendication 1, **caractérisé en ce qu'**il est composé d'au moins trois parties, réunies entre elles, comprenant deux parties (10, 11) formant les extrémités (6,7) du carter de direction (1), et au moins un module de liaison intermédiaire (18), de forme cylindrique ou sensiblement cylindrique.

4. Carter de direction (1) selon l'une des revendications 1 à 3, **caractérisé en ce que** ses parties constitutives, en particulier les deux demi-carters (10, 11), comportent intérieurement des nervures de renfort, notamment en forme d'ailettes radiales (12,13).

5. Carter de direction (1) selon l'une des revendications 1 à 4, **caractérisé en ce que** ses parties constitutives, en particulier les deux demi-carters (10,11), sont réalisés en matière plastique de préférence renforcée par des fibres de verre, de carbone ou d'aramide, ou par une combinaison de telles fibres.

6. Carter de direction (1) selon la revendication 5, **caractérisé en ce que** ses parties constitutives, en particulier, les deux demi-carters (10,11), sont réunis par soudage, tel que soudage par friction rotative.

7. Carter de direction (1) selon la revendication 5, **caractérisé en ce que** ses parties constitutives, en particulier les deux demi-carters (10,11), sont réunis par collage.

8. Carter de direction (1) selon l'une des revendications 1 à 4, **caractérisé en ce que** ses parties constitutives, en particulier les deux-demi carters (10,11) sont réalisés en métal ou en alliage métallique, notamment en alliage d'aluminium.

9. Carter de direction (1) selon la revendication 5, **caractérisé en ce que** l'un au moins de ses demi-carters (11) intègre directement dans la région d'une extrémité (7) du carter de direction (1) une fonction de guidage de la crémaillère (2), de préférence avec fonctions de bague de reprise d'effort et de butée.

10. Carter de direction (1) selon l'une des revendications 1 à 9, **caractérisé en ce que** l'une au moins de ses parties constitutives, en particulier un demi-carter (10), comporte intérieurement dans la région d'une extrémité (6) du carter de direction des formes d'accrochage pour une bague (17) rapportée et/ou une butée pour la crémaillère (2).

## Patentansprüche

1. Lenkgehäuse (1) eines Kraftfahrzeugs, das ausgelegt ist, um eine Zahnstange (2) aufzunehmen und zu führen, und vorzugsweise auch mindestens ein Ritzel, das mit der Zahnstange (2) eingreift, ebenso wie eventuell eine Druckstange, die das Ritzel gegen die Zahnstange (2) presst, wobei das Lenkgehäuse (1) eine längliche und hohle Form aufweist und aus mindestens zwei Gehäuseteilen (10, 11; 18) besteht, die in der Längsrichtung (A) der Gehäuses (1) aufeinander folgen, und die untereinander verbunden sind, **dadurch gekennzeichnet, dass** diese Gehäuseteile (10, 11; 18) derart ausgelegt sind, dass sie dem Lenkgehäuse (1) eine eiförmige oder eine spindelförmige äußere Gestalt verleihen, wobei der Schnitt des Gehäuses bedeutend wichtiger in seinem zentralen Bereich als in den Bereichen seiner Enden (6, 7) ist.

2. Lenkgehäuse (1) nach Anspruch 1, **dadurch gekennzeichnet, dass** es aus zwei Halbgehäusen (10, 11) gebildet ist, d.h. einem rechten Halbgehäuse (10) und einem linken Halbgehäuse (11), die auf einer mittleren Verbindungsebene (P) aneinander gestellt und miteinander verbunden sind, wobei jedes Halbgehäuse (10) eine zunehmenden Abschnitt zwischen seinem Ende (6, 7), das von der Verbindungsebene (P) entfernt ist, und dieser Verbindungsebene (P) aufweist.

3. Lenkgehäuse (1) nach Anspruch 1, **dadurch gekennzeichnet, dass** es aus mindestens drei Teilen besteht, die untereinander verbunden sind, umfassend zwei Teile (10, 11), die die Enden (6, 7) des Lenkgehäuses (1) bilden, und mindestens ein Zwischen-Verbindungsmodul (18) mit einer zylindrischen oder im Wesentlichen zylindrischen Form.

4. Lenkgehäuse (1) nach einem der Ansprüche 1 bis 3, **dadurch gekennzeichnet, dass** seine Bestandteile, insbesondere die zwei Halbgehäuse (10, 11), im Inneren Verstärkungsrippen umfassen, insbesondere in Form von radialen Rippen (12, 13).

5. Lenkgehäuse (1) nach einem der Ansprüche 1 bis 4, **dadurch gekennzeichnet, dass** seine Bestandteile, insbesondere die zwei Halbgehäuse (10, 11), aus Kunststoffmaterial hergestellt sind, vorzugsweise verstärkt durch Glas-, Kohlenstoff- oder Aramidfasern oder durch eine Kombination von derartigen Fasern.

6. Lenkgehäuse (1) nach Anspruch 5, **dadurch gekennzeichnet, dass** seine Bestandteile, insbesondere die zwei Halbgehäuse (10, 11), durch Schweißung wie z.B. Rotationsschweißung verbunden sind.

7. Lenkgehäuse (1) nach Anspruch 5, **dadurch gekennzeichnet, dass** seine Bestandteile, insbesondere die zwei Halbgehäuse (10, 11), durch Kleben verbunden sind.

8. Lenkgehäuse (1) nach einem der Ansprüche 1 bis 4, **dadurch gekennzeichnet, dass** seine Bestandteile, insbesondere die zwei Halbgehäuse (10, 11), aus Metall oder Metalllegierung, insbesondere aus Aluminiumlegierung hergestellt sind.

9. Lenkgehäuse (1) nach Anspruch 5, **dadurch gekennzeichnet, dass** mindestens eines seiner Halbgehäuse (11) direkt in den Bereich eines Endes (7) des Lenkgehäuses (1) eine Funktion zur Führung der Zahnstange (2) integriert, vorzugsweise mit Ringfunktionen zur Kraftwiederaufnahme und zum Anschlag.

10. Lenkgehäuse (1) nach einem der Ansprüche 1 bis 9, **dadurch gekennzeichnet, dass** mindestens eines seiner Bestandteile, insbesondere ein Halbgehäuse (10), innen im Bereich eines Endes (6) des Lenkgehäuses Befestigungsformen für einen hinzugefügten Ring (17) und/oder einen Anschlag für die Zahnstange (2) umfasst.

## Claims

1. A steering casing (1) of a motor vehicle, provided to house and guide a rack (2), and also preferably at least one pinion engaged with the rack (2), as well as possibly a pusher pressing the pinion against the rack (2), this steering casing (1) having an elongated and hollow shape, and being constituted by at least two casing portions (10, 11 ; 18) which are arranged successively in the longitudinal direction (A) of the casing (1) and which are combined together, **characterized in that** these portions (10, 11 ; 18) of the casing are shaped so as to confer to the steering casing (1) an ovoid or spindle outer shape, the section of the casing being significantly larger in its central region than in the regions of its ends (6, 7).

2. The steering casing (1) according to claim 1, **characterized in that** it is composed of two half-casings (10, 11), namely a right half-casing (10) and a left half-casing (11), joined and combined with each other in a junction midplane (P), each half-casing (10) having an increasing section between its end (6, 7) distant from the junction plane (P) and this junction plane (P).

3. The steering casing (1) according to claim 1, **characterized in that** it is composed of at least three portions, combined together, comprising two portions (10, 11) forming the ends (6,7) of the steering casing (1), and at least one intermediate connection module (18), with a cylindrical or substantially cylindrical shape.

4. The steering casing (1) according to any of claims 1 to 3, **characterized in that** its constitutive portions, in particular the two half-casings (10, 11), internally include reinforcing ribs, in particular in the form of radial fins (12, 13).

5. The steering casing (1) according to any of claims 1 to 4, **characterized in that** its constitutive portions, in particular the two half-casings (10, 11), are made of a plastic material preferably reinforced by glass, carbon or aramid fibers, or by a combination of such fibers.

6. The steering casing (1) according to claim 5, **characterized in that** its constitutive portions, in particular, the two half-casings (10, 11), are combined by welding, such as rotational friction welding.

7. The steering casing (1) according to claim 5, **characterized in that** its constitutive portions, in particular the two half-casings (10, 11), are combined by bonding.

8. The steering casing (1) according to any of claims 1 to 4, **characterized in that** its constitutive portions, in particular the two half-casings (10, 11) are made of a metal or a metallic alloy, in particular of an aluminum alloy.

9. The steering casing (1) according to claim 5, **characterized in that** at least one of its half-casings (11) directly integrates in the region of an end (7) of the steering casing (1) a guiding function for the rack (2), preferably with force take-up ring and abutment functions.

10. The steering casing (1) according to any of claims 1 to 9, **characterized in that** at least one of its constitutive portions, in particular a half-casing (10), includes internally in the region of an end (6) of the steering casing, hooking shapes for an inserted ring (17) and/or an abutment for the rack (2).
